# EUROPEAN PATENT APPLICATION

(11) **EP 4 845 228 A1**
(43) Date of publication of application: **25.11.2026**
(21) Application number: 24925908.6
(22) Date of filing: 22.02.2024
(51) Int. Cl.: H04W 36/30

(54) **INFORMATION PROCESSING DEVICE, INFORMATION PROCESSING METHOD, AND INFORMATION PROCESSING PROGRAM**

(71) Applicant: Softbank Corp., Tokyo 105-7529 (JP)
(72) Inventor: SERIZAWA, Koichi, Tokyo 105-7529 (JP)
(74) Representative: SSM Sandmair
(86) International application number: PCT/JP2024/006663
(87) International publication number: WO 2025/177577

(57) **Abstract**

An information processing apparatus includes an acquisition unit that acquires first terminal data that is related to a first terminal and first base station data that is related to a first base station serving as a communicating party of the first terminal, a change unit that changes a handover condition for the first terminal by using handover performance data based on each piece of terminal data that is related to each of terminals and each piece of base station data that is related to each of base stations serving as communicating parties of the respective terminals, and by using the first terminal data and the first base station data that are acquired by the acquisition unit, and a notification unit that notifies the first terminal of the handover condition for the first terminal that is changed by the change unit.

## Description

### Field

The present invention is related to an information processing apparatus, an information processing method, and an information processing program.

### Background

Handover is known as operation of switching a base station of a communication target of a terminal. With regard to the handover, a technology for determining whether or not communication is performed in an environment in which unneeded handover frequently occurs, a technology for allowing connection to a different wireless communication service based on a learned behavior pattern of a user of a terminal, and the like are known.

### Citation List

### Patent Literature

Patent Literature 1: Japanese Laid-open Patent Publication No. 2006-186797
Patent literature 2: Japanese Laid-open Patent Publication No. 2014-217023

### Summary

### Technical Problem

However, in the conventional technologies, a handover condition, such as a radio wave condition, for performing handover is statically set inside a base station. Therefore, in the conventional technology, a ping-pong phenomenon occurs in which a user frequently performs handover between base stations that are able to communicate with the terminal, and communication quality may be degraded due to unneeded signaling. Further, as a user experience, it is more likely that the user feels deterioration of communication quality, such as disconnection of communication or audio, due to the ping-pong phenomenon.

The present application has been conceived in view of the foregoing situation, and an object is to prevent deterioration of communication quality due to handover.

### Solution to Problem

According to one aspect of an embodiment, An information processing apparatus includes:
an acquisition unit acquires first terminal data that is related to a first terminal and first base station data that is related to a first base station serving as a communicating party of the first terminal;
a change unit that changes a handover condition for the first terminal by using handover performance data based on each piece of terminal data that is related to each of terminals and each piece of base station data that is related to each of base stations serving as communicating parties of the respective terminals, and by using the first terminal data and the first base station data that are acquired by the acquisition unit; and
a notification unit that notifies the first terminal of the handover condition for the first terminal that is changed by the change unit.

### Advantageous Effects of Invention

According to one aspect of the present invention, it is possible to prevent deterioration of communication quality due to handover.

### Brief Description of Drawings

FIG. 1 is a diagram for explaining an information processing system according to a first embodiment.
FIG. 2 is a diagram for explaining a change of a handover condition for a first terminal.
FIG. 3 is a block diagram illustrating a configuration of an information processing apparatus according to the first embodiment.
FIG. 4 is a diagram for explaining a training process according to the first embodiment.
FIG. 5 is a flowchart illustrating the flow of information processing according to the first embodiment.
FIG. 6 is a diagram for explaining a training process according to a second embodiment.
FIG. 7 is a diagram for explaining a training process according to a third embodiment.
FIG. 8 is a hardware configuration diagram illustrating an example of a computer that implements functions of the information processing apparatus. Description of Embodiments

Embodiments of the present invention will be described below with reference to the drawings, but the present invention is not limited to the embodiments below. In addition, in description of the drawings, the same components are denoted by the same reference symbols, repeated explanation will be omitted, and explanation of the components with the same functions and the same processes will also be omitted.

### 1. First embodiment

### 1-1. Introduction

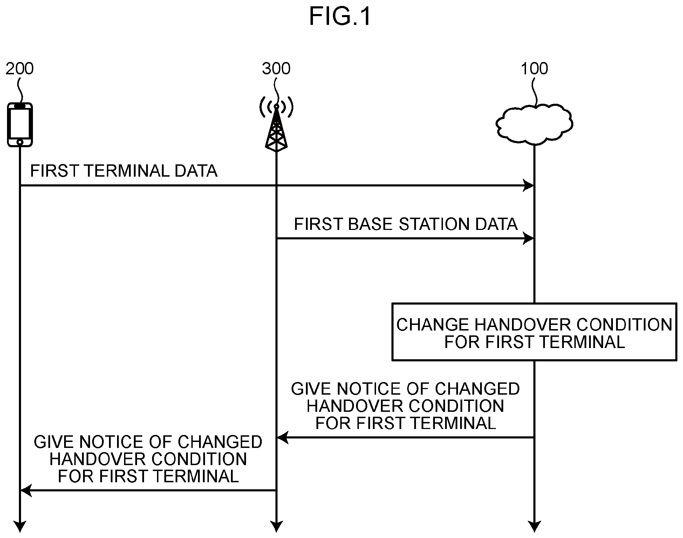

An overview of an information processing system according to one embodiment will be described with reference to FIG. 1. FIG. 1 is a diagram for explaining the information processing system according to the first embodiment. In FIG. 1, the information processing system includes an information processing apparatus 100, a first terminal 200, and a first base station 300.

The information processing apparatus 100 is an apparatus that performs information processing with the first terminal 200 and the first base station 300 and may be a Radio Access Network (RAN) Intelligent Controller (RIC), a server, or the like. The RIC is an information processing apparatus that estimates various kinds of information based on the RAN and a predetermined computational resource, such as Artificial Intelligence (AI), for example.

The first terminal 200 is a terminal that communicates with the information processing apparatus 100 and the first base station 300 and may be a smartphone or the like. The first base station 300 is a communicating party for the first terminal 200 and may be a Radio Unit (RU) or the like that is managed by a Distributed Unit (DU).

Conventionally, with regard to handover, a technology for determining whether or not communication is performed in an environment in which unneeded handover frequently occurs, a technology for allowing connection to a different wireless communication service based on a learned behavior pattern of a user of a terminal, and the like are known.

However, in the conventional technologies, a handover condition is statically set inside a base station. Therefore, in the conventional technology, a ping-pong phenomenon occurs between base stations that are located in a range in which communication with a terminal is enabled, and communication quality may be deteriorated due to unneeded signaling. Further, as a user experience, it is more likely that the user feels deterioration of communication quality, such as disconnection of communication or audio, due to the ping-pong phenomenon.

The present invention has been conceived in view of the above circumstances, and an object is to prevent deterioration of communication quality due to handover. In the following, an example will be described in which the information processing apparatus 100 changes a handover condition for the first terminal 200 by using handover performance data, first terminal data, and first base station data.

The handover performance data is based on each piece of terminal data that is related to each of terminals and each piece of base station data that is related to each of base stations serving as communicating parties of the respective terminals, and may be, for example, data that is related to performance of handover that is performed by each of the terminals with respect to the communicating party. The handover performance data is, for example, a trained model that outputs a handover condition in accordance with input of each piece of the terminal data and each piece of the base station data, a database, such as a table in which each piece of the terminal data and each piece of the base station data are associated, or the like.

The first terminal data is terminal data that is related to the first terminal 200. The first terminal data may be a cell Identification (ID), a Global Positioning System (GPS), a Reference Signal Received Power (RSRP), or the like. The first base station data is base station data that is related to the first base station 300. The first base station data may be neighboring base station data that is related to a base station that is a candidate communicating party of the first terminal 200, an Uplink (UL) Signal-to-Interference-plus-Noise Ratio (SINR), or the like.

Firstly, the information processing apparatus 100 acquires the first terminal data and the first base station data. For example, the information processing apparatus 100 acquires, as the first terminal data, a cell ID, a GPS, or an RSRP. Further, the information processing apparatus 100 acquires, as the first base station data, neighboring base station data or a UL SINR.

Subsequently, the information processing apparatus 100 changes the handover condition for the first terminal 200 by using the handover performance data, the first terminal data, and the first base station data. For example, the information processing apparatus 100 inputs the first terminal data and the first base station data to a trained model that outputs a handover condition in accordance with input of each piece of the terminal data and each piece of the base station data and changes the condition.

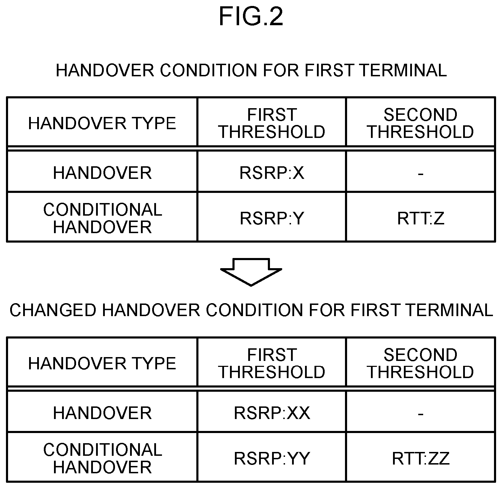

This will be described in detail below with reference to the example illustrated in FIG. 2. FIG. 2 is a diagram for explaining a change of the handover condition for the first terminal. The information processing apparatus 100 inputs the first terminal data and the first base station data to a trained model that outputs, as the handover condition for the first terminal 200, a threshold for a difference in an RSRP between the base stations, and changes the threshold for the difference in an RSRP between the first base station 300 and a candidate communicating party of the first terminal 200 from "X" to "XX".

Further, with respect to a conditional handover condition for the first terminal 200 in which an additional condition is added to the handover condition for the first terminal 200, the information processing apparatus 100 inputs the first terminal data and the first base station data to a trained model that outputs thresholds for differences in two parameters between the base stations, and changes the thresholds for the differences in the two parameters between the first base station 300 and the candidate communicating party of the first terminal 200.

Specifically, the information processing apparatus 100 inputs the first terminal data and the first base station data to the trained model and changes a threshold for a difference in a RSRP between the first base station 300 and the candidate communicating party from "Y" to "YY". Further, the information processing apparatus 100 changes a threshold for a difference in Round-Trip Time (RTT) between the first base station 300 and the candidate communicating party from "Z" to "ZZ".

In FIG. 2, the information processing apparatus 100 increases the threshold and tightens the handover condition for the first terminal 200. However, as in a third embodiment to be described later, when the condition is to be changed by using each piece of the terminal data and each piece of the base station data in a whole area that covers a range of radio waves of each of the base stations, the information processing apparatus 100 may decrease the threshold and ease the condition in a predetermined environment.

Referring back to the explanation of FIG. 1, the information processing apparatus 100 notifies the first terminal 200 of the changed handover condition for the first terminal 200 and the changed conditional handover condition for the first terminal 200.

For example, by causing the first base station 300 to notify the first terminal 200 of the changed handover condition for the first terminal 200 or the like, the information processing apparatus 100 indirectly notifies the first terminal 200 of the condition. In this case, the first base station 300 gives a notice to the first terminal 200 together with transmission of, for example, a Radio Resource Control (RRC) reconstruction message or a System Information Block (SIB). Thereafter, a well-known process that is indicated by 3GPP (registered trademark) TS 38.300 or the like is performed.

In this manner, the information processing apparatus 100 refers to the handover performance data and dynamically changes the handover condition for the first terminal 200 in accordance with the first terminal data and the first base station data. Therefore, the information processing apparatus 100 is able to prevent deterioration of communication quality due to handover. Further, the information processing apparatus 100 is able to reduce occurrence of a ping-pong phenomenon and unneeded signaling and establish a communication environment that provides a good user experience.

### 1-2. Configuration of information processing apparatus

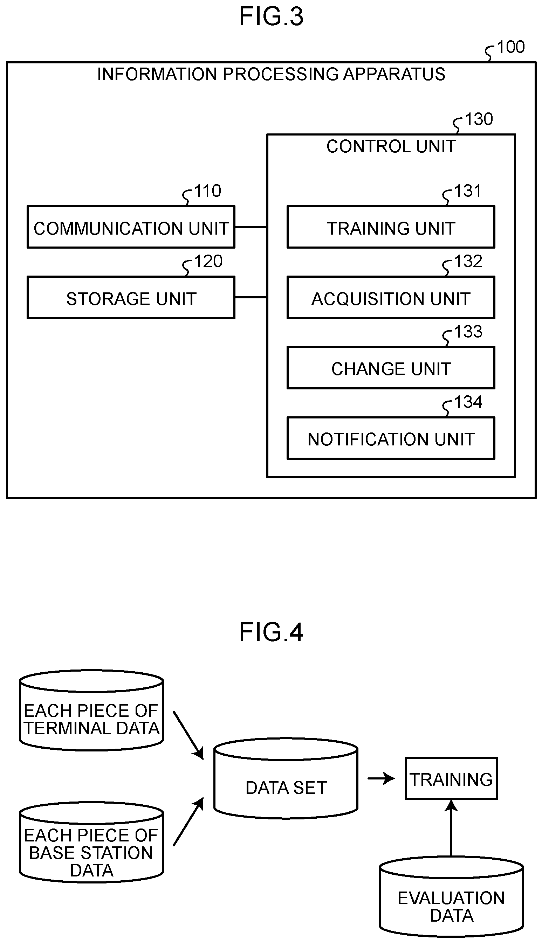

A configuration of the information processing apparatus 100 will be described with reference to FIG. 3. FIG. 3 is a block diagram illustrating the configuration of the information processing apparatus according to the first embodiment. In FIG. 3, the information processing apparatus 100 includes a communication unit 110, a storage unit 120, and a control unit 130.

### Communication unit

The communication unit 110 is a processing unit that performs communication with a different apparatus, and may be a communication interface or the like. For example, the communication unit 110 receives the first terminal data from the first terminal 200 and receives the first base station data from the first base station 300. Further, the communication unit 110 transmits the changed handover condition for the first terminal 200 to the first base station 300 or the like.

### Storage unit

The storage unit 120 is a processing unit that stores therein various kinds of data, a program that is executed by the control unit 130, or the like, and may be a storage device, a semiconductor memory, or the like. The storage unit 120 stores therein, for example, the model as described above, various kinds of data, such as the handover performance data, the first terminal data, the first base station data, and the handover condition for the first terminal 200, an Operating System (OS) and various kinds of programs that are executed by the information processing apparatus 100, and the like.

### Control unit

The control unit 130 is a processing unit that controls the entire information processing apparatus 100, and may be a processor or the like. The control unit 130 includes a training unit 131, an acquisition unit 132, a change unit 133, and a notification unit 134. Meanwhile, the training unit 131, the acquisition unit 132, the change unit 133, and the notification unit 134 may be implemented as electronic circuits that are included in the processor, or processes that are executed by the processor.

### Training unit

The training unit 131 trains a model while adopting a data set that includes each piece of the terminal data and each piece of the base station data as an input variable and adopting a handover condition as an output variable. A training process will be described in detail below with reference to an example illustrated in FIG. 4. FIG. 4 is a diagram for explaining the training process.

Each piece of the terminal data includes, for example, each piece of terminal data that is associated with each piece of the base station data, and each piece of terminal data that is referred to when the handover condition is changed. As one example, each piece of the terminal data that is associated with each piece of the base station data includes a TimeStamp, a Radio Access Technology (RAT), a Time Division Duplex (TDD), a Frequency Division Duplex (FDD), a Physical Cell Identification (PCI), a Type Allocation Code (TAC), a Call Indicator (CI), a BAND, a BANDWIDTH, an Absolute Radio-Frequency Channel Number (ARFCN), or the like.

As one example, each piece of the terminal data that may be referred to when the handover condition is changed includes an RSRP, a Reference Signal Received Quality (RSRQ), a Signal Noise Rate (SNR), an SINR, a Received Signal Strength Indicator (RSSI), a LATITUDE, a LONGITUDE, a GPSSPEED, a Downlink (DL) Throughput (THP), an UL THP, an RTT, or the like. In some cases, each piece of the terminal data that may be referred to when the handover condition is changed does not include a DL THP, an UL THP, and an RTT for the reason that a load is too heavy for commercial use.

Each piece of the base station data includes, for example, base station data that is related to a predetermined base station serving as a communicating party of a predetermined terminal and the neighboring base station data as described above. As one example, the base station data includes a Date Time, an RAT, a TDD, an FDD, a next generation Node B (gNB), an evolved Node B (eNBB) ID, an ARFCN, a PCI, a TAC, a CI, a BAND, a BANDWIDTH, an SINR, an RSSI, or the like.

As one example, the neighboring base station data includes a CI, a PCI, an ARFCN, a TAC, a Quadrature (Q)-OFFSET, a Random-Access Channel (RACH) INFORMATION, a TYPE of NEIGHBOR RELATION, a BLACKLISTED CELLS, a MEASUREMENT REPORT THRESHOLDS, or the like.

Meanwhile, each piece of the base station data illustrated in FIG. 4 is data that is updated every 15 minutes, and the training unit 131 associates each piece of the terminal data as described above with each piece of the base station data by performing linear interpolation in seconds to generate the data set as illustrated in FIG. 4.

Subsequently, the training unit 131 trains a model while adopting the data set that includes each piece of the terminal data and each piece of the base station data as an input variable and adopting evaluation data that includes the handover condition and the conditional handover condition as an output variable.

When the evaluation data is the handover condition, the training unit 131 trains the model while adopting a single parameter, such as an RSRP, as the output variable. Further, when the evaluation data is the conditional handover condition, the training unit 131 trains the model while adopting two parameters, such as an RSRP and an RSRQ, as the output variables. In this case, the training unit 131 individually trains the model when the evaluation data is the handover condition and when the evaluation data is the conditional handover condition.

### Acquisition unit

Referring back to explanation of FIG. 3, the acquisition unit 132 acquires the first terminal data and the first base station data.

### Change unit

The change unit 133 changes the handover condition for the first terminal 200 by using the handover performance data and by using the first terminal data and the first base station data that are acquired by the acquisition unit 132.

As one example, the change unit 133 changes the handover condition for the first terminal 200 by referring to, as the handover performance data, a table in which each piece of the terminal data and each piece of the base station data are associated, instead of a trained model.

As another example, the change unit 133 inputs the first terminal data and the first base station data to a trained model that outputs a handover condition in accordance with input of each piece of the terminal data and each piece of the base station data, and changes the handover condition for the first terminal 200.

In the change process as described above, the change unit 133 may be able to inputting the first terminal data and the first base station data to a trained model that outputs, as the handover condition for the first terminal 200, a threshold for a difference in a single parameter between the base stations, and change a threshold for a difference in an arbitrary single parameter between the first base station 300 and the candidate communicating party of the first terminal 200. For example, the change unit 133 inputs the first terminal data and the first base station data to the trained model and changes a threshold for a difference in an RSRP between the first base station 300 and the candidate communicating party.

In the change process as described above, with respect to the conditional handover condition for the first terminal 200, the change unit 133 may be able to input the first terminal data and the first base station data to a trained model that outputs thresholds for differences in two parameters between the base stations, and change the thresholds for the differences in the two parameters between the first base station 300 and the candidate communicating party of the first terminal 200.

For example, the change unit 133 inputs the first terminal data and the first base station data to the trained model, and changes the thresholds for the differences in two of an RSRP, an RSRQ, an RTT, a DL THP, and an UL THP between the first base station 300 and the candidate communicating party.

The change unit 133 may be able to change the handover condition for the first terminal 200, as a change of the handover condition for the first terminal 200 or the like, by further using network data that is related to a network.

In this case, the change unit 133 changes the threshold for the difference in the RSRP between the first base station 300 and the candidate communicating party of the first terminal 200 to a different value depending on the network data that is related to a network design or the like of a vendor or a carrier. With this configuration, the change unit 133 is able to further prevent deterioration of communication quality due to handover.

### Notification unit

The notification unit 134 notifies the first terminal 200 of the handover condition for the first terminal 200 that is changed by the change unit 133. The notification unit 134 may be able to further notify the first base station 300 of the changed conditional handover condition for the first terminal 200.

For example, by causing the first base station 300 to notify the first terminal 200 of the condition or the like, the notification unit 134 indirectly notifies the first terminal 200 of the condition or the like. In this case, the first base station 300 gives a notice to the first terminal 200 together with transmission of, for example, an RRC reconstruction message or an SIB. The notification unit 134 may be able to notify the first terminal 200 of the condition or the like via a different apparatus, such as a web server, or a different route, instead of the first base station 300.

### 1-3. Flow of process

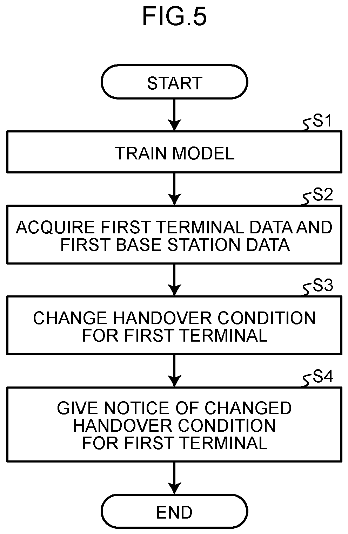

FIG. 5 is a flowchart illustrating the flow of information processing according to the first embodiment. The training unit 131 trains a model while adopting each piece of the terminal data and each piece of the base station data as input variables and adopting the handover condition as an output variable (S1). Subsequently, the acquisition unit 132 acquires the first terminal data and the first base station data (S2).

Then, the change unit 133 changes the handover condition for the first terminal 200 by using the handover performance data and by using the first terminal data and the first base station data that are acquired by the acquisition unit 132 (S3). Subsequently, the notification unit 134 notifies the first terminal 200 of the handover condition for the first terminal 200 that is changed by the change unit 133 (S4).

### 2. Second embodiment

The information processing apparatus 100, when changing the handover condition for the first terminal 200 in the first embodiment, is able to change the condition to a condition under which a ping-pong phenomenon can more easily be avoided. Therefore, in a second embodiment, an example will be described in which the condition is changed to a condition under which a ping-pong phenomenon can more easily be avoided.

### 2-1. Configuration of information processing apparatus

The information processing apparatus 100 includes the same components as those of the first embodiment. However, in the second embodiment, the training unit 131 and the change unit 133 have different functions.

### Training unit

The training unit 131 trains a model while adopting, as an input variable and as each piece of terminal data, terminal data that is related to a ping-pong phenomenon occurrence terminal that has performed handover a predetermined number of times or more within a predetermined period among a plurality of terminals.

The training unit 131 trains a model while adopting, as an input variable, each piece of the terminal data including the terminal data that is related to the ping-pong phenomenon occurrence terminal. For example, the training unit 131 trains a motel while adopting, as an input variable, each piece of the terminal data that includes terminal data related to at least one of a position of the subject terminal and the number of times of handover that is performed by the subject terminal.

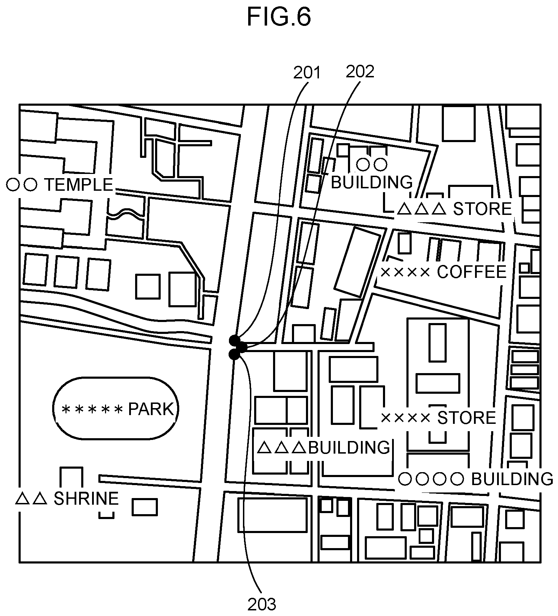

One example of the training process that is performed by the training unit 131 will be described below with reference to FIG. 6. FIG. 6 is a diagram for explaining the training process according to the second embodiment. The training unit 131 determines that the ping-pong phenomenon has occurred when the number of times of switching of the PCI in each piece of the terminal data is equal to or larger than a predetermined number within a predetermined period, such as four times or more within 10 seconds, based on a PCI and a TimeStamp of each piece of the terminal data.

Subsequently, the training unit 131 visually identifies the position of the subject terminal by comparing at least one piece of location data, such as a LATITUDE, a LONGITUDE, and a GPSSPEED, in the terminal data of the ping-pong phenomenon occurrence terminal with map data. In FIG. 6, the training unit 131 identifies, as locations of ping-pong phenomenon occurrence terminals, a first terminal location 201, a second terminal location 202, and a third terminal location 203. Further, the training unit 131 trains a model while adopting each piece of the terminal data including the above-described terminal locations as an input variable.

Meanwhile, a first terminal corresponding to the first terminal location 201 in FIG. 6 may be the same as or different from the first terminal 200 illustrated in FIG. 1.

### Change unit

The change unit 133 inputs the first terminal data and the first base station data to a trained model that corresponds to input of terminal data, as each piece of the terminal data, that is related to the ping-pong phenomenon occurrence terminal, and changes the handover condition for the first terminal 200. For example, the change unit 133 inputs the first terminal data and the first base station data to a trained model that adopts, as an input variable, the number of times of handover performed by the ping-pong phenomenon occurrence terminal, and changes a threshold for a difference in an RSRP between the first base station 300 and the candidate communicating party of the first terminal 200.

Further, the change unit 133 may be able to input the first terminal data and the first base station data to a trained model that corresponds to input of location data, as the terminal data, that is related to a location of the ping-pong phenomenon occurrence terminal, and change the handover condition for the first terminal 200. For example, the change unit 133 inputs the first terminal data and the first base station data to a trained model that adopts, as an input variable, at least one of a LATITUDE, a LONGITUDE, and a GPSSPEED of the ping-pong phenomenon occurrence terminal, and changes the threshold for the difference in the RSRP between the first base station 300 and the candidate communicating party of the first terminal 200.

### 3. Third embodiment

The information processing apparatus 100, when changing the handover condition for the first terminal 200 in the first embodiment, is able to change the condition based on a whole area that covers a range of radio waves of each of the base stations. Therefore, in a third embodiment, an example will be described in which the condition is changed based on the whole area.

### 3-1. Configuration of information processing apparatus

The information processing apparatus 100 includes the same components as those of the first embodiment. However, in the third embodiment, the training unit 131 and the change unit 133 have different functions.

### Training unit

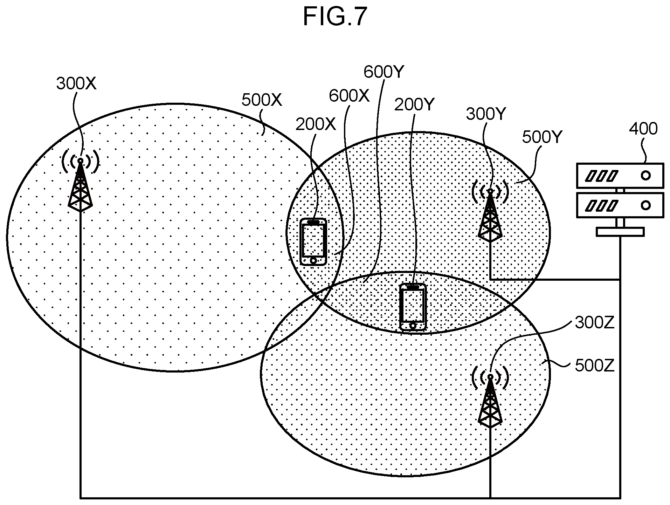

The training unit 131 trains a model while adopting, as an input variable, a data set that includes each piece of the terminal data and each piece of the base station data in the whole area. This will be described in detail below with reference to an example illustrated in FIG. 7. FIG. 7 is a diagram for explaining a training process according to the third embodiment. In FIG. 7, base stations serving as communicating parties of each of terminals, such as a first terminal 200X and a second terminal 200Y, are represented as a first base station 300X, a second base station 300Y, and a third base station 300Z.

In FIG. 7, the training unit 131 trains a model by using, as an input variable, a data set on the whole area that covers a range of radio waves of each of the first base station 300X, the second base station 300Y and the third base station 300Z that are RUs or the like managed by a management apparatus 400 that is a DU or the like. In other words, the training unit 131 trains a model while adopting, as an input variable, a data set of all of a first area 500X that is a range of radio waves of the first base station 300X, a second area 500Y that is a range of radio waves of the second base station 300Y, and a third area 500Z that is a range of the third base station 300Z.

Meanwhile, the first terminal 200X illustrated in FIG. 7 may be the same as or different from the first terminal 200 illustrated in FIG. 1 etc. or a terminal corresponding to the first terminal location 201 illustrated in FIG. 6. The second terminal 200Y illustrated in FIG. 7 may be the same as or different from a terminal corresponding to the second terminal location 202 illustrated in FIG. 6. Furthermore, the first base station 300X illustrated in FIG. 7 may be the same as or different from the first base station 300 illustrated in FIG. 1 etc.

### Change unit

The change unit 133 changes the handover condition for the first terminal 200 by inputting the first terminal data and the first base station data to a trained model that corresponds to input of each piece of the terminal data and each piece of the base station data on the whole area.

This will be described in detail below with reference to the example illustrated in FIG. 7. In FIG. 7, the change unit 133 inputs the first terminal data and the first base station data to a trained model that adopts, as an input variable, a data set for all of the first area 500X, the second area 500Y, and the third area 500Z, and changes the handover condition for the first terminal 200. Here, it is assumed that the first terminal 200 is located at a first handover occurrence point 600X at which the first area 500X and the second area 500Y overlap with each other.

In FIG. 7, when optimization is performed at only the first handover occurrence point 600X, a ping-pong phenomenon may occur at a second handover occurrence point 600Y at which the second area 500Y and the third area 500Z overlap with each other. Meanwhile, the optimization described herein indicates that the handover condition for the first terminal 200 located at the first handover occurrence point 600X is tightened by increasing the threshold for the difference in the RSRP between the first base station 300 and the candidate communicating party of the first terminal 200.

Therefore, the change unit 133 inputs the first terminal data and the first base station data into a trained model that takes into account both of the first handover occurrence point 600X and the second handover occurrence point 600Y. Further, the change unit 133 changes the threshold for the difference in the RSRP or the like between the first base station 300 and the candidate communicating party of the first terminal 200.

In this case, the change unit 133 decreases the threshold for the difference in the RSRP between the first base station 300 and the candidate communicating party and eases the handover condition for the first terminal 200 that is located at the first handover occurrence point 600X. With this configuration, the change unit 133 is able to reduce a total number of ping-pong phenomena at the second handover occurrence point 600Y.

### 4. Effects

As described above, the information processing apparatus 100 according to one embodiment includes the acquisition unit 132, the change unit 133, and the notification unit 134. The acquisition unit 132 acquires the first terminal data that is related to the first terminal 200 and the first base station data that is related to the first base station 300 serving as a communicating party for the first terminal 200. The change unit 133 changes the handover condition for the first terminal 200 by using the handover performance data based on each piece of terminal data that is related to each of terminals and each piece of base station data that is related to each of base stations serving as communicating parties of the respective terminals, and by using the first terminal data and the first base station data that are acquired by the acquisition unit 132. The notification unit 134 notifies the first terminal 200 of the handover condition for the first terminal 200 that is changed by the change unit 133.

In this manner, the information processing apparatus 100 refers to the handover performance data and dynamically changes the handover condition for the first terminal 200 in accordance with the first terminal data and the first base station data. Therefore, the information processing apparatus 100 is able to prevent deterioration of communication quality due to handover. In addition, the information processing apparatus 100 is able to reduce occurrence of a ping-pong phenomenon and unneeded signaling and establish a communication environment that provides good user experience.

Furthermore, in the information processing apparatus 100 according to one embodiment, the change unit 133 inputs the first terminal data and the first base station data to a trained model that outputs the handover condition in accordance with input of each piece of the terminal data and each piece of the base station data, and changes the handover condition for the first terminal 200.

In this manner, with use of the trained model, the information processing apparatus 100 is able to further prevent deterioration of communication quality due to handover.

Moreover, in the information processing apparatus 100 according to one embodiment, the change unit 133 inputs the first terminal data and the first base station data to the trained model that outputs, as the handover condition for the first terminal 200, a threshold for a difference in an RSRP between the base stations, and changes a threshold for a difference in an RSRP between the first base station 300 and a candidate communicating party of the first terminal 200.

In this manner, by changing a threshold for a difference in a parameter that has a large influence on handover, the information processing apparatus 100 is able to further precent deterioration of communication quality due to handover.

Furthermore, in the information processing apparatus 100 according to one embodiment, the change unit 133 inputs the first terminal data and the first base station data to the trained model that outputs thresholds for differences in two parameters between the base stations, and changes thresholds for differences in two parameters between the first base station 300 and the candidate communicating party of the first terminal 200.

In this manner, by changing the handover condition with two output variables, such as a conditional handover condition, the information processing apparatus 100 is able to further prevent deterioration of communication quality due to handover.

Moreover, in the information processing apparatus 100 according to one embodiment, the change unit 133 inputs the first terminal data and the first base station data to the trained model that outputs the thresholds for the differences in the two parameters between the base stations, and changes thresholds for differences in two of an RSRP, an RSRQ, an RTT, a DL THP, and an UL THP between the first base station 300 and the candidate communicating party of the first terminal 200.

In this manner, by changing the thresholds for the differences in the two parameters that have large influences on handover, the information processing apparatus 100 is able to further prevent deterioration of communication quality due to handover.

Furthermore, in the information processing apparatus 100 according to one embodiment, the change unit 133 inputs the first terminal data and the first base station data to the trained model that corresponds to input of terminal data, as each piece of the terminal data, that is related to a terminal that has performed the handover a predetermined number of time or more within a predetermined period among the plurality of terminals, and changes the handover condition for the first terminal 200.

With this configuration, with respect to the handover condition for the first terminal 200, the information processing apparatus 100 is able to change the threshold to a threshold or the like with which the handover is less likely to occur a predetermined number of times or more. Therefore, the information processing apparatus 100 is able to change the condition to a handover condition under which the ping-pong phenomenon can easily be avoided.

Moreover, in the information processing apparatus 100 according to one embodiment, the change unit 133 inputs the first terminal data and the first base station data to the trained model that corresponds to input of, as the terminal data, location data that is related to a location of a terminal that has performed the handover a predetermined number of times or more within a predetermined period, and changes the handover condition for the first terminal 200.

In this manner, the information processing apparatus 100 changes the handover condition for the first terminal 200 by using a trained model or the like that adopts a ping-pong phenomenon occurrence point as an input variable. With this configuration, the information processing apparatus 100 is able to change the handover condition to a handover condition or the like under which the first terminal 200 can easily avoid a ping-pong phenomenon at the ping-pong phenomenon occurrence point.

Furthermore, in the information processing apparatus 100 according to one embodiment, the change unit 133 inputs the first terminal data and the first base station data to the trained model that corresponds to input of each piece of the terminal data and each piece of the base station data on a whole area that covers a range of radio waves of each of the base stations, and changes the handover condition for the first terminal 200.

In this manner, the information processing apparatus 100 changes the handover condition for the first terminal 200 by using a trained model that takes into account a handover occurrence point in the whole area. With this configuration, the information processing apparatus 100 is able to reduce the number of ping-pong phenomena in the whole area and improve efficiency of signaling in the whole area.

### 5. Hardware configuration

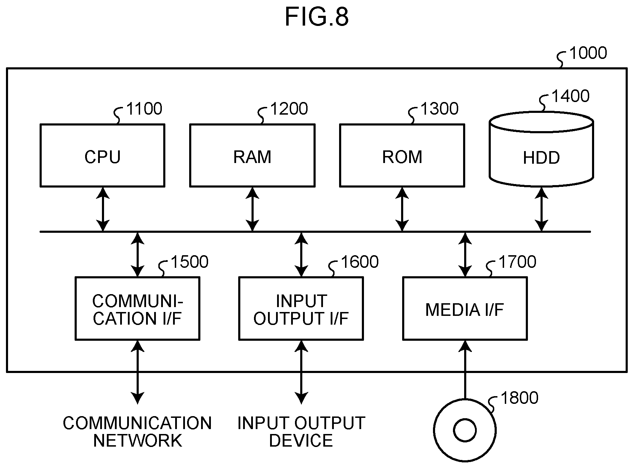

The information processing apparatus 100 according to the embodiments as described above may be implemented by, for example, a computer 1000 that is configured as illustrated in FIG. 8. FIG. 8 is a hardware configuration diagram illustrating an example of a computer that implements the functions of the information processing apparatus. The computer 1000 includes a CPU 1100, a RAM 1200, a ROM 1300, an HDD 1400, a communication interface (I/F) 1500, an input output interface (I/F) 1600, and a media interface (I/F) 1700.

The CPU 1100 operates based on a program that is stored in the ROM 1300 or the HDD 1400, and controls each of the units. The ROM 1300 stores therein a boot program that is executed by the CPU 1100 at the time of activation of the computer 1000, a program that is dependent on hardware of the computer 1000, or the like.

The HDD 1400 stores therein a program that is executed by the CPU 1100, data that is used by the program, and the like. The communication interface 1500 receives data from a different apparatus via a predetermined communication network, sends the data to the CPU 1100, and transmits data that is generated by the CPU 1100 to a different apparatus via a predetermined communication network.

The CPU 1100 controls an output device, such as a display or a printer, and an input device, such as a keyboard or a mouse, via the input output interface 1600. The CPU 1100 acquires data from the input device via the input output interface 1600. Further, the CPU 1100 outputs generated data to the output device via the input output interface 1600.

The media interface 1700 reads a program or data that is stored in a recording medium 1800, and provides the program or the data to the CPU 1100 via the RAM 1200. The CPU 1100 loads the program from the recording medium 1800 onto the RAM 1200 via the media interface 1700, and executes the loaded program. The recording medium 1800 is, for example, an optical recording medium, such as a Digital Versatile Disc (DVD) or a Phase change rewritable Disk (PD), a magneto-optical recording medium, such as a Magneto-Optical disk (MO), a tape medium, a magnetic recording medium, a semiconductor memory, or the like.

For example, when the computer 1000 functions as the information processing apparatus 100 according to one embodiment, the CPU 1100 of the computer 1000 executes a program that is loaded onto the RAM 1200 and implements the functions of the control unit 130. The CPU 1100 of the computer 1000 reads the program from the recording medium 1800 and executes the program; however, as another example, it may be possible to acquire the program from a different apparatus via a predetermined communication network.

Thus, some embodiments of the present application have been described in detail above based on the drawings, but they are illustrated by examples, and the present invention may be implemented as other embodiments with various modifications and improvements based on knowledge of a person skilled in the art, including aspects described in the section of the disclosure of the present invention.

### 6. Others

Of the processes described in the embodiments, all or part of a process described as being performed automatically may also be performed manually. Alternatively, all or part of a process described as being performed manually may also be performed automatically by known methods. In addition, the processing procedures, specific names, and information including various kinds of data and parameters illustrated in the above-described document and drawings may be arbitrarily changed unless otherwise specified. For example, various kinds of information illustrated in each of the drawings are not limited to the information illustrated in the drawings.

Furthermore, the components of the apparatuses illustrated in the drawings are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions.

Moreover, the information processing apparatus 100 as described above may be implemented by a plurality of server computers, and the configuration may be flexibly changed depending on functions; for example, the functions may be implemented by calling an external platform or the like by an Application Programming Interface (API), network computing, or the like.

Furthermore, the embodiments as described above may be appropriately combined as long as processing contents do not conflict with each other.

### Reference Signs List

- 100: information processing apparatus
- 110: communication unit
- 120: storage unit
- 130: control unit
- 131: training unit
- 132: acquisition unit
- 133: change unit
- 134: notification unit

## Claims

1. An information processing apparatus comprising:
an acquisition unit acquires first terminal data that is related to a first terminal and first base station data that is related to a first base station serving as a communicating party of the first terminal;
a change unit that changes a handover condition for the first terminal by using handover performance data based on each piece of terminal data that is related to each of terminals and each piece of base station data that is related to each of base stations serving as communicating parties of the respective terminals, and by using the first terminal data and the first base station data that are acquired by the acquisition unit; and
a notification unit that notifies the first terminal of the handover condition for the first terminal that is changed by the change unit.

2. The information processing apparatus according to claim 1, wherein the change unit inputs the first terminal data and the first base station data to a trained model that outputs the handover condition in accordance with input of each piece of the terminal data and each piece of the base station data, and changes the handover condition for the first terminal.

3. The information processing apparatus according to claim 2, wherein the change unit inputs the first terminal data and the first base station data to the trained model that outputs, as the handover condition for the first terminal, a threshold for a difference in a Reference Signal Received Power (RSRP) between the base stations, and changes a threshold for a difference in an RSRP between the first base station and a candidate communicating party of the first terminal.

4. The information processing apparatus according to claim 2, wherein the change unit inputs the first terminal data and the first base station data to the trained model that outputs thresholds for differences in two parameters between the base stations, and changes thresholds for differences in two parameters between the first base station and a candidate communicating party of the first terminal.

5. The information processing apparatus according to claim 4, wherein the change unit inputs the first terminal data and the first base station data to the trained model that outputs the threshold for the differences in the two parameters between the base stations, and changes thresholds for differences in two of an RSRP, a Reference Signal Received Quality (RSRQ), a Round-Trip Time (RTT), a Downlink Throughput (DL THP), and an Uplink (UL) THP between the first base station and the candidate communicating party.

6. The information processing apparatus according to claim 2, wherein the change unit inputs the first terminal data and the first base station data to the trained model that corresponds to input of terminal data, as each piece of the terminal data, that is related to a terminal that has performed the handover a predetermined number of times or more within a predetermined period among the plurality of terminals, and changes the handover condition for the first terminal.

7. The information processing apparatus according to claim 6, wherein the change unit inputs the first terminal data and the first base station data to the trained model that corresponds to input of, as the terminal data, location data that is related to a location of a terminal that has performed the handover a predetermined number of times or more within a predetermined period, and changes the handover condition for the first terminal.

8. The information processing apparatus according to claim 2, wherein the change unit inputs the first terminal data and the first base station data to the trained model that corresponds to input of each piece of the terminal data and each piece of the base station data on a whole area that covers a range of radio waves of each of the base stations, and changes the handover condition for the first terminal.

9. An information processing method that is implemented by an information processing apparatus, the information processing method comprising:
acquiring first terminal data that is related to a first terminal and first base station data that is related to a first base station serving as a communicating party of the first terminal;
changing a handover condition for the first terminal by using handover performance data based on each piece of terminal data that is related to each of terminals and each piece of base station data that is related to each of base stations serving as communicating parties of the respective terminals, and by using the first terminal data and the first base station data that are acquired at the acquiring; and
notifying the first terminal of the handover condition for the first terminal that is changed at the changing.

10. An information processing program that causes a computer to execute:
acquiring first terminal data that is related to a first terminal and first base station data that is related to a first base station serving as a communicating party of the first terminal;
changing a handover condition for the first terminal by using handover performance data based on each piece of terminal data that is related to each of terminals and each piece of base station data that is related to each of base stations serving as communicating parties of the respective terminals, and by using the first terminal data and the first base station data that are acquired at the acquiring; and
notifying the first terminal of the handover condition for the first terminal that is changed at the changing.
